(19) Europäisches Patentamt
European Patent Office
Office européen des brevets

(11) **EP 3 396 156 B1**

(12) **EUROPEAN PATENT SPECIFICATION**

(45) Date of publication and mention
of the grant of the patent:
**27.11.2019 Bulletin 2019/48**

(51) Int Cl.:
*F03D 7/02* *(2006.01)*          *H02J 3/38* *(2006.01)*
*F03D 7/04* *(2006.01)*          *H02J 3/18* *(2006.01)*
*H02J 3/46* *(2006.01)*

(21) Application number: **18020138.6**

(22) Date of filing: **06.04.2018**

(54) **CONTROL METHOD FOR A WIND FARM AND WIND FARM**

VERFAHREN ZUR STEUERUNG EINES WINDPARKS UND WINDPARK

PROCÉDÉ DE COMMANDE POUR PARC ÉOLIEN ET PARC ÉOLIEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2017 ES 201700563**

(43) Date of publication of application:
**31.10.2018 Bulletin 2018/44**

(73) Proprietor: **SIEMENS GAMESA RENEWABLE
ENERGY INNOVATION
& TECHNOLOGY, S.L.
31621 Sarriguren (Navarra) (ES)**

(72) Inventors:
• **Berasain Balda, Jose Ignacio**
**31621 Sarriguren (Navarra) (ES)**
• **Lopez Segura, Cesar Antonio**
**31621 Sarriguren (Navarra) (ES)**
• **Mendizabal Abasolo, Patxi**
**31621 Sarriguren (Navarra) (ES)**
• **Berasain Balda, Alberto**
**31621 Sarriguren (Navarra) (ES)**

(74) Representative: **Aspacher, Karl-Georg
Siemens Gamesa Renewable Energy GmbH & Co.
KG
Otto-Hahn-Ring 6
81739 München (DE)**

(56) References cited:
**US-A1- 2015 137 520**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 396 156 B1

## Description

### TECHNICAL FIELD

The present invention relates to control methods for wind farms connected to a power grid, in the event of disturbances in the power grid, and to associated wind farms.

### PRIOR ART

The use of wind energy as a source of electrical energy is widely known today. Wind energy is obtained from wind turbines which convert kinetic energy of the wind into mechanical energy, and said mechanical energy into electrical energy. Wind turbines generally comprise a tower, a nacelle located in the apex of the tower, and a rotor which is supported on the nacelle by means of a shaft. A plurality of generators of different wind turbines can furthermore be grouped to form a wind farm.

The significant increase in the acceptance of wind energy generation has led many countries and power grid operators to implement strict grid connection requirements for wind farms, which requirements are also known as grid codes. Some grid codes, such as grid codes enforced in countries such as Germany and Spain, to name two examples, require the wind turbine generators of a wind farm to comply with specific requirements continuously and before, during and after disturbance, both in steady-state and during disturbances in the power grid, such that the wind farm remains connected to the grid during disturbance in the grid, and so that it performs reactive control at its point of common coupling (PCC) according to a voltage drop-based injection profile during disturbance in the grid.

In the current prior art, wind farm response during disturbances in the power grid changing the voltage of the point of common coupling of the wind farm such that it is outside the permanent operating range is performed locally in each of the elements forming part of the wind farm (wind turbines and/or reactive compensation units such as STATCOM ("STATic synchronous COMpensator"), if any, for example). This solution uses the quick response capacity of each of the dynamic elements of the farm, but this response is not optimized since each of these elements is not communicated with the rest of the elements nor does it have access to the measurements of the point of common coupling.

It is impossible to assure suitable operation of the whole wind farm with this solution, rather suitable operation of each of the controllable elements of the wind farm is assured individually, and there is a need extrapolate what the operation of the wind farm as a whole shall be by defining an estimated behavior of all the elements of the wind farm, such as: wind in each wind turbine, number of operating wind turbines, and state of the variable sub-station elements (compensation units, capacitors, inductances, switches, etc.). This estimation must be performed for a single scenario, so it does not always represent the actual state of the wind farm and does not assure appropriate compliance with the requirements at the point of common coupling.

This limitation is compensated for by negotiating the possible deviations that may occur at the point of common coupling with the wind farm operator and carrier (TSO, "Transmission System Operator"), and if negotiation is not possible, by installing greater controllable generation capacity in the wind farm which allows covering the worst case scenario (using more wind turbine capacities, and/or installing wind turbines with greater performances, and/or installing compensation units such as STATCOM, for example, and/or increasing compensation unit capacities, for example).

Patent document US2015/137520A1 describes a wind power plant and a control method thereof. A central plant controller is configured to control an electric output of the wind power plant in the event of a transient low-voltage fault of the electric grid. The central plant controller is configured, after a fault stage in response to detection of a low-voltage fault during which the wind turbines ride through the grid fault, to control the wind power plant during a post-fault-support stage to provide only real power, or perform voltage control. The central plant controller is configured to resume control of the wind power plant according to the nominal-grid operation mode, which prevailed before the low-voltage fault, in a nominal-grid operation stage.

Patent document WO2015078472A1 describes a control with which the injection and absorption of reactive power in a wind farm are controlled. In addition to wind turbines, the wind farm described herein comprises reactive power regulating devices (reactive compensation units), such as MSU ("Mechanically Switched Unit") and STATCOM devices. The reactive power generated by the regulating devices is controlled by means of the farm controller, such that the combined amount of reactive power produced by the wind turbines and by the regulating devices satisfies a desired amount of reactive power. In case of communication fault between the farm controller and one of the regulating devices, the farm controller is reconfigured to compensate for the capacity of said device and to inject or absorb the required amount of reactive power in/from the grid.

Patent document WO2015086022A1 discloses a method for controlling the injection of reactive current in a wind farm during a grid fault. The amount of reactive current that must be injected by the wind farm to the grid during the fault is measured, a difference between the reactive current that is being injected and the reactive current that must be injected is determined, and the wind turbines of the wind farm are controlled for generating the specific active current difference.

### DISCLOSURE OF THE INVENTION

The object of the invention is to provide a control method for a wind farm and an associated wind farm, as defined in the claims. The invention is defined in the independent claims. Preferred embodiments of the invention are defined in the dependent claims.

A first aspect of the invention relates to a control method for a wind farm which is connected to a power grid and comprising a plurality of generating units, such as wind turbines, for example, and a local controller associated to each generating unit. The presence or absence of a voltage disturbance in the power grid is determined with the method in a dynamic and recurrent manner. When the presence of a disturbance is determined, a control phase is implemented in a dynamic and recurrent manner while said presence lasts, during which the generating units are controlled so that they control the (active and/or reactive) power on the point of common coupling of the wind farm and thereby participate in stabilizing the grid voltage. Once the disappearance of said disturbance is determined, the method stops implementing the control phase.

When the disappearance of the disturbance is determined, and in the absence of another disturbance, in addition to stopping the implementation of the control phase, a stabilization phase is implemented in a dynamic and recurrent manner for a limited time interval. The limited time interval can be predetermined based on previous experiences and/or studies, for example, where the time elapsing between the disappearance of a disturbance and complete grid stabilization is estimated or measured, although it could be also be determined in real time, for example, based on measurements (preferably of the electrical characteristics of the grid). This means that the limited time interval may vary from farm to farm and from case to case, being greater in the case of weak grids and/or large wind farms and/or more sudden disturbances. This limited time interval is usually of the order of several seconds. In the stabilization phase, while the generating units continue to be controlled so that they control the power on the point of common coupling of the wind farm, such that a smooth and controlled transient is provided until the voltage of the grid stabilizes. Further mandatory features of the method according to the invention are defined in claim 1.

In summary, according to some of the features of claim 1, the presence or absence of a voltage disturbance in the power grid is determined in a dynamic and recurrent manner with the proposed method, and:

- when a disturbance is detected, a control phase is implemented in a dynamic and recurrent manner during the presence thereof; and
- when the disappearance of said disturbance is detected, implementation of the control phase stops and a stabilization phase is implemented in a dynamic and recurrent manner for a limited time interval sufficient for stabilizing the grid.

As long as the presence of a disturbance is not determined (and the stabilization phase is not being executed), the method implements a steady-state phase in which the objective thereof is to comply with the requirements applied to the grid by means of the generating units.

Unlike what occurs in some known systems where, in order to stabilize the power grid, action is only performed independently during the presence of a disturbance in said grid, the proposed method does not only help in stabilizing the grid during the presence of disturbances using the generating units in a coordinated manner but also helps to stabilize the grid during the transient occurring between the disappearance of said disturbances and the steady-state state of the power grid, a correct stabilization of the grid being greatly assured without it furthermore affecting the wind farm capacities once the disturbance disappeared. This furthermore prevents sudden changes in wind farm generation, for example, prevents sudden changes from being able to bring about negative impacts on the grid to which it is connected.

A second aspect of the invention relates to a wind farm which is connected to a power grid and comprising a plurality of generating units. The wind farm is suitable and configured for supporting and implementing a method according to the first aspect of the invention, the same advantages as those mentioned for said method thus being obtained.

These and other advantages and features of the invention will become evident in view of the drawings and detailed disclosure of the invention.

DESCRIPTION OF THE DRAWINGS

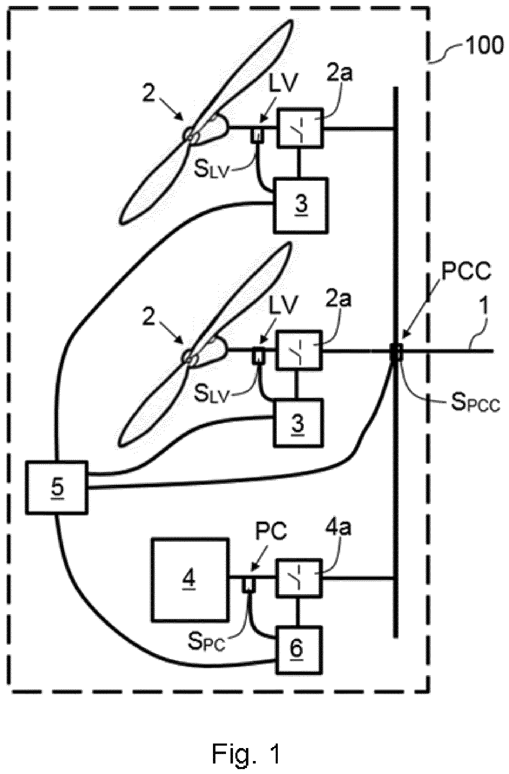

Figure 1 schematically shows an embodiment of a wind farm according to the invention.

DETAILED DISCLOSURE OF THE INVENTION

A first aspect of the invention relates to a control method for a wind farm 100 connected to a power grid 1 and comprising a plurality of generating units 2, such as wind turbines, for example, and a local controller 3 associated to each generating unit 2. The wind farm 100 further comprises an associated converter 2a which is associated with each generating unit 2, each local controller 3 acting on its associated converter 2a for controlling the generation of power from the corresponding generating unit 2.

The method is executed in a dynamic and recurrent manner. Figure 1 shows an embodiment of the wind farm 100 further comprising a farm controller 5 acting as the controller of the wind farm 100. The farm controller 5 is communicated with the local controllers 3, such that it enables controlling the generation of the generating units 2 through the respective local controllers 3.

The presence or absence of a voltage disturbance in the grid 1 is determined with the method, and a specific control is performed on the generating units 2 of the wind farm 100 when the presence of a disturbance is determined in order to stabilize the grid 1, keeping the units 2 connected to the grid 1. In the context of the invention, voltage disturbance in the grid 1 must be interpreted as what is commonly known as a low-voltage disturbance or LVRT (Low-voltage Ride Through) or as high-voltage disturbance or HVRT (High-voltage Ride Through).

To determine the presence or absence of a disturbance, the method implements the following measurements in a dynamic and recurrent manner:

- at least one electrical characteristic of the grid 1 at the point of common coupling PCC of the wind farm 100, preferably the electric voltage at said point of common coupling PCC, is measured, said point of common coupling PCC being the common point through which all the generating units 2 are coupled to said grid 1; and
- at least one electrical characteristic at a local point of coupling LV associated with each generating unit 2, preferably the electric voltage at said point of coupling LV, is measured.

The presence of a disturbance is generally determined when the measured value of at least one of the measured electrical characteristics exceeds a respective associated predetermined maximum threshold value or is below a respective associated predetermined minimum threshold, the absence of a disturbance being determined otherwise. In particular:

- When the measured value at the point of common coupling PCC exceeds the corresponding predetermined maximum threshold value or is below the corresponding predetermined minimum threshold value, the farm controller 5 determines the presence of a disturbance and the farm controller 5 is in a disturbance state.
- When the measured value at a point of coupling LV exceeds the corresponding predetermined maximum threshold value or is below the corresponding predetermined minimum threshold value, the corresponding local controller 3 determines the presence of a local disturbance and said local controller 3 is in a disturbance state. Said local controller 3 furthermore transmits this information to the farm controller 5 which thereby knows at all times whether or not one of the local controllers 3 is in a disturbance state, and the farm controller 5 can also go into a disturbance state depending on the number of local controllers 3 in a disturbance state in each case. Preferably, a specific number of local controllers 3 detecting a disturbance for the farm controller 5 (or a percentage of total local controllers 3 present in the wind farm 100) is required, and this number (or percentage) can be predetermined for each case based, for example, on previous tests and/or studies. If a local controller 3 does not determine any disturbance, said local controller 3 is in steady-state and acts on the corresponding generating unit 2 depending on said instructions.

Different controllers 3 can simultaneously determine the presence of a local disturbance, but only controller 5 can determine the presence of a disturbance at the general level of the wind farm.

When the presence of a disturbance is determined, regardless of the controllers 3 and 5 that determined it, a control phase which is executed in a dynamic and recurrent manner, while the presence of the disturbance continues to be determined, is activated. During said control phase, the presence or absence of a disturbance continues to be determined in parallel in the way mentioned above, such that when a disturbance disappears it can be determined with the method, and the control phase is deactivated (or stops to be implemented) when said disappearance is determined.

When said disappearance is determined (and the presence of any other disturbance is not determined), in addition to deactivating the control phase, a stabilization phase which is executed in a continuous and recurrent manner is activated for a limited time interval. When going into the stabilization phase, the farm controller 5 goes from the disturbance state to a stabilization state.

In the control phase, the generating units 2 of the wind farm 100 are controlled so that they comply with the power requirements required for the wind farm 100 in the presence of a disturbance (for example, the generation of current and/or power to be injected into the grid 1). Said control is under the responsibility of the farm controller 5 through the corresponding local controller 3 in each case, or the local controller 3 itself which does not follow the possible instructions that may be received from the farm controller 5, as described in detail below. When the responsibility falls on the local controller 3 itself, in the context of the invention said local controller 3 is said to act independently or in local mode.

In the stabilization phase, while the generating units 2 of the wind farm 100 continue to be controlled in order to comply with the power requirements, for the purpose of providing a smooth and controlled transient after the disappearance of disturbance until the voltage of the grid 1 stabilizes in steady-state.

In general, during the disturbance and at the outlet thereof (during execution of control and stabilization phases) the wind farm 100 must preferably produce reactive current and/or power for stabilizing the voltage of the grid 1. The reactive current and/or power must furthermore be supplied in a dynamic manner according to the measurements taken and to the capacities of the generating units 2.

As long as the presence of a disturbance is not determined (and stabilization phase is not being executed), the method implements a steady-state phase in which the objective thereof is to comply with the requirements applied to the grid 1 (increasing/decreasing reactive power, following an instruction, etc.), by means of the generating units 2. In the steady-state phase, all the controllers 3 and 5 are in steady-state.

During method implementation, the farm controller 5 generates generation instructions at all times, regardless of whether or not a disturbance has been determined, and it transmits them to the local controllers 3, as applicable. In the steady-state phase, these instructions refer to the power to be generated by the generating units 2, and the local controllers 3 act on the corresponding generating units 2 depending on said received instructions.

During the control and stabilization phases of the method, however, the local controllers 3 may or may not follow these instructions, as described in detail below, but in any case this instruction generation allows the farm controller 5 to take over control of the generating units 2 as soon as possible and in the best way possible when the local mode of the corresponding local controllers 3 ends, moment in which the local controllers 3 act on the respective generating units 2 depending on the received instructions (the farm controller 5 acts as master).

In a first embodiment, in the control and stabilization phases the local controllers 3 act in local mode, not following the instructions received from the farm controller 5.

In a second embodiment, at the beginning of the control phase and/or the stabilization phase, and for a limited time interval (a transient) established by the corresponding local controller 3 for stabilizing the value of the local variables, the local controllers 3 act in local mode, and after said time interval has elapsed said local controllers 3 act depending on the instructions they receive from the farm controller 5. In the second embodiment, it is considered that the transient (time interval) has ended or has stabilized when the following conditions are complied with at the same time (in the moment in which all the conditions are present):

- A predetermined time interval has elapsed since the activation of the control phase or stabilization phase. The time interval can be predetermined based on previous experiences and/or studies, for example, being able to vary from farm to farm, and is usually of the order of milliseconds (less than 1 second).
- The measurements taken are stable.
- The generating units 2 are ready (or have the capacity) to follow the instructions generated by the farm controller 5, actuated by the corresponding local controller 3. This furthermore allows the farm controller 5 to take over control of the generating units 2 which are ready to follow the instructions thereof, but not the others, this being able to give rise to the situation in which some generating units 2 are controlled by the farm controller 5 through its corresponding local controllers 3, whereas others are not controlled by said farm controller 5 and act in local mode.

Generally, in the control and stabilization phases the actuation of the wind farm 100 as a response to any disturbance is improved when the farm controller 5 controls the local controllers 3, but the transitory response in the event of said disturbance is quicker if the local controllers 3 act in local mode. A combination of both advantages is optimally obtained with the second embodiment. In the second embodiment, the dynamic behavior and controllability of the wind farm 100 is thereby improved, which can turn it into the optimum solution for weak grids 1 and for when strict response times are required, for example.

Each local controller 3 is configured for causing the corresponding generating unit 2 to follow the instructions generated by the farm controller 5, or for said generating unit 2 to act in local mode, as mentioned above. Generally:

- In the absence of disturbances and with the voltage of the grid 1 in steady-state (in steady-state phase), each local controller 3 is in steady-state and configured for causing the corresponding generating unit 2 to comply with the power requirements established by the farm controller 5 (the local controllers 3 follow the instructions received from said farm controller 5).
- When the control phase or stabilization phase is being executed, if a local controller 3 is in steady-state it causes the corresponding generating unit 2 to comply with the power requirements established by the farm controller 5, and if it is in a disturbance or stabilization state, said local controller 3 is configured for acting in local mode (first embodiment), for following the instructions received from the farm controller 5, or for combining the two modes (second embodiment).

When a local controller 3 determines the presence of a disturbance and operates in local mode, said local controller 3 activates a reactive power generation mode for the generating unit 2 on which it acts if one of the following conditions is complied with:

- the value of the measured electrical characteristic based on which said presence has been determined is greater than a reference value and is within a specific range of values above said reference value, said state being maintained while said disturbance lasts and said value is maintained within said range,
- the value of the measured electrical characteristic based on which said presence has been determined is less than said reference value and is within a specific range of values below said reference value, said state being maintained while said disturbance lasts and said value is maintained within said range.

Said local controller 3 activates a reactive current generation mode for said generating unit 2 if said value is outside both ranges, said reactive current generation mode being maintained while said disturbance lasts and said value is maintained outside both ranges. Said generating unit 2 thereby generates power according to a local reactive power reference when the local controller 3 is in reactive power generation mode, and generates power according to a local reactive current reference when the local controller 3 is in reactive current generation mode. The reference value can be an expected value of said electrical characteristic, or the value of said electrical characteristic measured before determining the presence of a disturbance, for example.

When a local controller 3 is in reactive current or power generation mode, it acts on the corresponding generating unit 2 so that said generating unit 2 generates reactive current or power, respectively, depending on said measured value, given that said value gradually changes as the required reactive is being generated (the grid 1 gradually stabilizes), the reactive needs thereby being changed.

The reactive current and power generated by a generating unit 2 are monitored at all times, and in the moment in which the corresponding local controller 3 determines the presence of a disturbance, the value of the generated reactive current and/or power monitored in that moment is frozen, the corresponding frozen value being able to be used optionally in the reactive current generation mode (in the case of frozen reactive current value) for determining the reactive current to be produced, and in the reactive power generation mode (in the case of frozen reactive power value) for determining the reactive power to be produced. In particular, the frozen value can be added to a predetermined offset value, as depicted with the following equations:

$$I = I_{offset} + I_{(Vmeasure)}$$

$$Q = Q_{offset} + Q_{(Vmeasure)}$$

Wherein:

I: reactive current to be produced.
$I_{offset}$: frozen reactive current value.
$I_{(Vmeasure)}$: value of the reactive current to be produced, proportional to the measured value.
Q: reactive power to be produced.
$Q_{offset}$: frozen reactive power value.
$Q_{(Vmeasure)}$: value of the reactive power to be produced, proportional to the measured value.

If no frozen values are used, the terms $I_{offset}$ and $Q_{offset}$ of the above two equations would be equal to zero.

Generally, it is preferable that a local controller 3 always act in the reactive power generation mode, but in some embodiments, despite complying with the conditions for operating in that mode, in a first moment of the stabilization phase and during a time interval which preferably is less than 100 ms, said controller 3 is caused to act in the reactive current generation mode in order to reduce the electric voltage of the grid 1 (if said voltage exceeds the reference value).

The wind farm 100 where the method is implemented can further comprise at least one compensation unit 4 with an associated local controller 6 for providing reactive (current and/or power) to the grid 1 when required, as depicted in Figure 1. The local controller 6 is communicated with the farm controller 5. A compensation unit 4 can be a STATCOM or a bench of capacitors, for example.

In this case, in the method the local controllers 6 also determine the presence or absence of a disturbance in a manner similar to that of the local controllers 3, and to that end at least one electrical characteristic at a local point of coupling PC associated with each compensation unit 4, preferably the voltage at said point of coupling PC, is measured. The operation of a local controller 6 is analogous to that of a local controller 3, so what is described for said local controllers 3 and the different operating possibilities of said local controllers 3 are also applicable to the local controllers 6.

A second aspect of the invention relates to a wind farm 100 shown by way of example in Figure 1, which is connected to a grid 1 and comprises a plurality of generating units 2, a local controller 3 associated to each generating unit 2 and a farm controller 5 communicated with all the local controllers 3. The wind farm 100 is suitable and configured for supporting and implementing the method of the first aspect of the invention in any of its configurations and/or embodiments. Therefore, in some embodiments said wind farm 100 can further comprise a compensation unit 4 with its associated local controller 6, such as those described above for the first aspect of the invention. The farm controller 5 in these cases is communicated with the local controller 6.

The wind farm 100 further comprises an associated converter 2a which is associated with each generating unit 2, the local controller 3 acting on said converter 2a for controlling the generation of energy from said generating unit 2, and in the corresponding embodiments, it may further comprise an associated converter 4a which is associated to each compensation unit 4, as depicted in Figure 1, for controlling the generation of said compensation unit 4.

The wind farm 100 further comprises sensors $S_{PCC}$ and $S_{LV}$ (and $S_{PC}$, where appropriate) or detectors required for implementing the method, such as for example, those required in order to be able to measure the electrical characteristics based on which the presence or absence of disturbances in the power grid 1 is determined. These sensors $S_{PCC}$ and $S_{LV}$ (and $S_{PC}$, where appropriate) are furthermore communicated with the corresponding controllers 3 and 5 (and with the local controllers 6, where appropriate).

**Claims**

1. Control method for a wind farm connected to a power grid (1) and comprising a plurality of generating units (2) and a local controller (3) associated to each generating unit (2), whereby the presence or absence of a voltage disturbance in the grid (1) is determined in a dynamic and recurrent manner, a control phase being implemented in a dynamic and recurrent manner when the presence of a disturbance is determined, and the generating units (2) being controlled during said presence so that they generate power and participate in stabilizing the voltage of the grid (1) during said control phase, wherein furthermore, when the disappearance of said disturbance is determined in the method, and in the absence of another disturbance, implementation of the control phase stops and a stabilization phase is implemented in a dynamic and recurrent manner for a limited time interval, while the generating units (2) continue to be controlled for generating power during said stabilization phase for providing a smooth and controlled transient until the voltage of the grid (1) stabilizes, wherein when a local controller (3, 6) determines the presence of a disturbance, said local controller (3, 6) operates in a local mode at the beginning of the control phase and at the beginning of the stabilization phase, for a limited time interval in each case, acting on its associated unit (2, 4) without following instructions of a farm controller (5), and then acts, during said phases and after the respective time interval has elapsed, on its associated unit (2, 4) following instructions from the farm controller (5), wherein when a local controller (3, 6) acts in said local mode, a reactive power generation mode is activated for the associated unit (2, 4) if the value of a measured electrical characteristic at a local point of coupling (LV), based on which the corresponding disturbance has been determined, is greater than a specific reference value for said electrical characteristic and is within a specific range of values above said reference value, or if said value is less than said reference value and is within a specific range of values below said reference value, said reactive power generation mode being maintained while said disturbance lasts and said value is maintained within one of said ranges, a reactive current generation mode being activated for said unit (2, 4) if said value is outside both ranges and said reactive current generation mode being maintained while said disturbance lasts and said value is maintained outside both ranges, said unit (2, 4) generating reactive power according to a local reactive power reference when it is in the reactive power generation mode and generating reactive current according to a local reactive current reference when it is in the reactive current generation mode, wherein the reactive power or current to be produced by a unit (2, 4) when it is in the reactive power generation mode or in the reactive current generation mode, respectively, is proportional to the measured value of said electrical characteristic at its point of coupling (LV), wherein the reactive current and power produced by each unit (2, 4) are monitored at all times, the monitored values of the produced reactive current and power being frozen when the corresponding local controller (3, 6) determines the presence of a disturbance, the frozen value of the reactive current being added to the reactive current to be produced proportional to the measured value of said electrical characteristic when said unit (2, 4) is in the reactive current generation mode, and the frozen value of the reactive power being added to the reactive power to be produced proportional to said measured value when said unit (2, 4) is in the reactive power generation mode.

2. Control method for a wind farm according to claim 1, wherein an electrical characteristic of the grid (1) at the point of common coupling (PCC) of the wind farm (100) and said electrical characteristic at a local point of coupling (LV) associated with each generating unit (2) of the wind farm (100) are measured in a recurrent manner, the farm controller (5) determining the presence of a disturbance if the electrical characteristic measured at the point of common coupling (PCC) exceeds a corresponding predetermined maximum threshold value or is below a corresponding predetermined minimum threshold, or if there is a predetermined number of local controllers (3) in a local disturbance state, and a local controller (3) determining the presence of a local disturbance and going into a local disturbance state if the electrical characteristic measured at the corresponding point of coupling (LV) exceeds an associated predetermined maximum threshold value or is below an associated predetermined minimum threshold.

3. Control method for a wind farm according to claim 2, wherein the wind farm (100) further comprises at least one compensation unit (4) for providing reactive current and/or power to the grid (1) when required and a local controller (6) associated to said compensation unit (4), an electrical characteristic of the grid (1) at the point of common coupling (PCC) of the wind farm (100), an electrical characteristic at a point of coupling (LV) associated with each generating unit (2) of the wind farm (100), and an electrical characteristic at the point of coupling (PC) of the reactive compensator (4) to the grid (1) being measured in a recurrent manner, the farm controller (5) determining the presence of a disturbance if the electrical characteristic measured at the point of common coupling (PCC) exceeds a corresponding predetermined maximum threshold value or is below a corresponding predetermined minimum threshold, or if there is a predetermined number of local controllers (3, 6) in a local disturbance state, and a local controller (3, 6) determining the presence of a local disturbance and going into a local disturbance state if the electrical characteristic measured at the corresponding point of coupling (LV, PC) exceeds a corresponding associated predetermined maximum threshold value or is below a corresponding associated predetermined minimum threshold.

4. Control method for a wind farm according to claim 2 or 3, wherein when a local controller (3, 6) has not determined the presence of any disturbance and the control phase or stabilization phase is being implemented, said local controller (3, 6) is configured for acting on its associated unit (2, 4) following instructions from the farm controller (5).

5. Control method for a wind farm according to any of claims 2 to 4, wherein when a local controller (3, 6) determines the presence of a disturbance, said local controller (3, 6) is configured for acting on its associated unit (2, 4) following instructions from the farm controller (5) throughout the entire control phase and the entire stabilization phase.

6. Control method for a wind farm according to any of the claims 1 to 5, wherein when a local controller (3, 6) is configured for acting in local mode, if the measured value based on which the presence of the corresponding disturbance has been determined is outside a predetermined range of values, said local controller (3, 6) changes its configuration and acts on its associated unit (2, 4) following the instructions from the farm controller (5).

7. Control method for a wind farm according to any of claims 2 to 6, wherein the measured electrical characteristic is the voltage at the corresponding point of coupling (PCC, LV, PC).

8. Wind farm connected to a power grid (1) and comprising a plurality of generating units (2), further comprising a farm controller (5), and for each unit (2) comprising an associated local controller (3), wherein the wind farm is configured to perform a method according to any of the preceding claims.

9. Wind farm according to claim 8, wherein the farm controller (5) is in communication with all the local controllers (3).

10. Wind farm according to claim 9, comprising a compensation unit (4) for providing reactive current and/or power to the grid (1) when required and a local controller (6) for the compensation unit (4), the farm controller (5) furthermore being communicated with all the local controllers (3, 6).

11. Wind farm according to any of claims 8 to 10, comprising at least one sensor ($S_{PCC}$) for measuring the electrical characteristic corresponding to the point of common coupling (PCC), and a respective sensor ($S_{LV}$, $S_{PC}$) for measuring the electrical characteristic corresponding to each local point of coupling (LV, PC).

**Patentansprüche**

1. Verfahren zur Steuerung eines Windparks, der an ein Energienetz (1) angeschlossen ist und mehrere Erzeugungseinheiten (2) und eine lokale Steuerung (3), die jeder Erzeugungseinheit (2) zugehörig ist, umfasst, wobei auf dynamische und periodische Weise das Vorhandensein oder Nicht-Vorhandensein einer Spannungsstörung in dem Netz (1) bestimmt wird, wobei eine Steuerungsphase auf dynamische und periodische Weise durchgeführt wird, wenn das Vorhandensein einer Störung bestimmt wird, und die Erzeugungseinheiten (2) während dieses Vorhandenseins gesteuert werden, sodass sie Energie erzeugen und an der Stabilisierung der Spannung in dem Netz (1) während der Steuerungsphase mitwirken, wobei darüber hinaus, wenn das Verschwinden der Störung in dem Verfahren bestimmt wird und bei Nicht-Vorhandensein einer anderen Störung, die Durchführung der Steuerungsphase aufhört und für ein begrenztes Zeitintervall auf dynamische und periodische Weise eine Stabilisierungsphase durchgeführt wird, während die Erzeugungseinheiten (2) während der Stabilisierungsphase weiterhin zum Erzeugen von Energie gesteuert werden, um eine sanfte und gesteuerte Transiente bereitzustellen, bis sich die Spannung des Netzes(1) stabilisiert,

wobei, wenn eine lokale Steuerung (3, 6) das Vorhandensein einer Störung bestimmt, die lokale Steuerung (3, 6) zu Beginn der Steuerungsphase und zu Beginn der Stabilisierungsphase jeweils für ein begrenztes Zeitintervall in einem lokalen Modus arbeitet und dabei auf die ihr zugehörige Einheit (2, 4) einwirkt, ohne den Anweisungen einer Windparksteuerung (5) zu folgen, und dann während der Phasen und nach Ablauf des jeweiligen Zeitintervalls unter Befolgung von Anweisungen der Windparksteuerung (5) auf die ihr zugehörige Einheit (2, 4) einwirkt, wobei, wenn eine lokale Steuerung (3, 6) in dem lokalen Modus agiert, ein reaktiver Energieerzeugungsmodus für die zugehörige Einheit (2, 4) aktiviert wird, wenn der Wert einer gemessenen elektrischen Eigenschaft an einem lokalen Anschlusspunkt (LV), auf dessen Grundlage die entsprechende Störung bestimmt wurde, größer ist als ein spezifischer Referenzwert für die elektrische Eigenschaft und innerhalb eines spezifischen Bereichs von Werten oberhalb des Referenzwertes liegt, oder wenn der Wert geringer ist als der Referenzwert und innerhalb eines spezifischen Bereichs von Werten unterhalb des Referenzwertes liegt, der reaktive Energieerzeugungsmodus beibehalten wird, solange die Störung andauert und der Wert innerhalb eines der Bereiche beibehalten wird, wobei ein reaktiver Stromerzeugungsmodus für die Einheit (2, 4) aktiviert wird, wenn der Wert außerhalb beider Bereiche liegt, und der reaktive Stromerzeugungsmodus beibehalten wird, solange die Störung andauert und der Wert außerhalb beider Bereiche beibehalten wird, wobei die Einheit (2, 4) reaktive Energie gemäß einer lokalen Referenz für reaktive Energie erzeugt, wenn sie sich in dem reaktiven Energieerzeugungsmodus befindet, und reaktiven Strom gemäß einer lokalen Referenz für reaktiven Strom erzeugt, wenn sie sich in dem reaktiven Stromerzeugungsmodus befindet, wobei die reaktive Energie oder der reaktive Strom, die/der von einer Einheit (2, 4) zu produzieren ist, wenn sie sich in dem reaktiven Energieerzeugungsmodus beziehungsweise in dem reaktiven Stromerzeugungsmodus befindet, proportional zu dem gemessenen Wert der elektrischen Eigenschaft an ihrem Anschlusspunkt (LV) ist, wobei der reaktive Strom und die reaktive Energie, die von jeder Einheit (2, 4) erzeugt werden, jederzeit überwacht werden, wobei die überwachten Werte des produzierten reaktiven Stroms und der produzierten reaktiven Energie eingefroren werden, wenn die entsprechende lokale Steuerung (3, 6) das Vorhandensein einer Störung bestimmt, wobei der eingefrorene Wert des reaktiven Stroms zu dem zu produzierenden reaktiven Strom addiert wird, der proportional zu dem gemessenen Wert der elektrischen Eigenschaft ist, wenn sich die Einheit (2, 4) in dem reaktiven Stromerzeugungsmodus befindet, und der eingefrorene Wert der reaktiven Energie zu der zu produzierenden reaktiven Energie addiert wird, die proportional zu dem gemessenen Wert ist, wenn sich die Einheit (2, 4) in dem reaktiven Energieerzeugungsmodus befindet.

2. Verfahren zur Steuerung eines Windparks nach Anspruch 1, wobei eine elektrische Eigenschaft des Netzes (1) an dem Verknüpfungspunkt (PCC, Point of Common Coupling) des Windparks (100) und die elektrische Eigenschaft an einem lokalen Anschlusspunkt (LV), der jeder Erzeugungseinheit (2) des Windparks (100) zugehörig ist, auf periodische Weise gemessen werden, wobei die Windparksteuerung (5) das Vorhandensein einer Störung bestimmt, wenn die elektrische Eigenschaft, die an dem Verknüpfungspunkt (PCC) gemessen wird, einen entsprechenden festgelegten maximalen Grenzwert überschreitet oder unter einem entsprechenden festgelegten minimalen Grenzwert liegt oder wenn es eine festgelegte Anzahl lokaler Steuerungen (3) in einem lokalen Störungszustand gibt, und eine lokale Steuerung (3) das Vorhandensein einer lokalen Störung bestimmt und in einen lokalen Störungszustand übergeht, wenn die elektrische Eigenschaft, die an dem entsprechenden Anschlusspunkt (LV) gemessen wird, einen zugehörigen festgelegten maximalen Grenzwert überschreitet oder unter einem zugehörigen festgelegten maximalen Grenzwert liegt.

3. Verfahren zur Steuerung eines Windparks nach Anspruch 2, wobei der Windpark (100) ferner mindestens eine Ausgleichseinheit (4) zum Bereitstellen von reaktivem Strom und/oder reaktiver Energie für das Netz (1) bei Bedarf und eine lokale Steuerung (6), die der Ausgleichseinheit (4) zugehörig ist, umfasst, wobei eine elektrische Eigenschaft des Netzes (1) an dem Verknüpfungspunkt (PCC) des Windparks (100), eine elektrische Eigenschaft an einem Anschlusspunkt (LV), der jeder Erzeugungseinheit (2) des Windparks (100) zugehörig ist, und eine elektrische Eigenschaft an dem Anschlusspunkt (PC) des reaktiven Ausgleichers (4) an das Netz (1) auf periodische Weise gemessen werden, wobei die Windparksteuerung (5) das Vorhandensein einer Störung bestimmt, wenn die elektrische Eigenschaft, die an dem Verknüpfungspunkt (PCC) gemessen wird, einen entsprechenden festgelegten maximalen Grenzwert überschreitet oder unter einem entsprechenden festgelegten minimalen Grenzwert liegt oder wenn es eine festgelegte Anzahl lokaler Steuerungen (3, 6) in einem lokalen Störungszustand gibt, und eine lokale Steuerung (3, 6) das Vorhandensein einer lokalen Störung bestimmt und in einen lokalen Störungszustand übergeht, wenn die elektrische Eigenschaft, die an dem entsprechenden Anschlusspunkt (LV, PC) gemessen wird, einen entsprechenden zugehörigen festgelegten maximalen Grenzwert überschreitet oder unter einem entsprechenden zugehörigen festgelegten maximalen Grenzwert liegt.

4. Verfahren zur Steuerung eines Windparks nach Anspruch 2 oder 3, wobei, wenn eine lokale Steuerung (3, 6) nicht das Vorhandensein einer Störung bestimmt hat und die Steuerungsphase oder Stabilisierungsphase durchgeführt wird, die lokale Steuerung (3, 6) dazu konfiguriert ist, auf die ihr zugehörige Einheit (2, 4) unter Befolgung von Anweisungen von der Windparksteuerung (5) einzuwirken.

5. Verfahren zur Steuerung eines Windparks nach einem der Ansprüche 2 bis 4, wobei, wenn eine lokale Steuerung (3, 6) das Vorhandensein einer Störung bestimmt, die lokale Steuerung (3, 6) dazu konfiguriert ist, während der gesamten Steuerungsphase und der gesamten Stabilisierungsphase auf die ihr zugehörige Einheit (2, 4) unter Befolgung von Anweisungen von der Windparksteuerung (5) einzuwirken.

6. Verfahren zur Steuerung eines Windparks nach einem der Ansprüche 1 bis 5, wobei, wenn eine lokale Steuerung (3, 6) dazu konfiguriert ist, im lokalen Modus zu wirken, wenn der gemessene Wert, auf dessen Grundlage das Vorhandensein der entsprechenden Störung bestimmt wurde, außerhalb eines festgelegten Bereichs von Werten liegt, die lokale Steuerung (3, 6) ihre Konfiguration ändert und auf die ihr zugehörige Einheit (2, 4) unter Befolgung der Anweisungen von der Windparksteuerung (5) einwirkt.

7. Verfahren zur Steuerung eines Windparks nach einem der Ansprüche 2 bis 6, wobei die gemessene elektrische Eigenschaft die Spannung an dem entsprechenden Anschlusspunkt (PCC, LV, PC) ist.

8. Windpark, der mit einem Energienetz (1) verbunden ist und mehrere Erzeugungseinheiten (2) umfasst, ferner eine Windparksteuerung (5) umfassend und für jede Einheit (2) eine zugehörige lokale Steuerung (3) umfassend, wobei der Windpark dazu konfiguriert ist, ein Verfahren nach einem der vorhergehenden Ansprüche auszuführen.

9. Windpark nach Anspruch 8, wobei die Windparksteuerung (5) mit allen lokalen Steuerungen (3) in Kommunikationsverbindung steht.

10. Windpark nach Anspruch 9, eine Ausgleichseinheit (4) zum Bereitstellen von reaktivem Strom und/oder reaktiver Energie für das Netz (1) bei Bedarf und eine lokale Steuerung (6) für die Ausgleichseinheit (4) umfassend, wobei die Windparksteuerung (5) darüber hinaus mit allen lokalen Steuerungen (3, 6) kommuniziert.

11. Windpark nach einem der Ansprüche 8 bis 10, mindestens einen Sensor ($S_{PCC}$) zum Messen der elektrischen Eigenschaft entsprechend dem Anknüpfungspunkt (PCC) und einen jeweiligen Sensor ($S_{LV}$, $S_{PC}$) zum Messen der elektrischen Eigenschaft entsprechend jedem lokalen Anschlusspunkt (LV, PC) umfassend.

**Revendications**

1. Procédé de commande pour parc éolien relié à un réseau électrique (1) et comprenant une pluralité d'unités de génération (2) et une unité de commande locale (3) associée à chaque unité de génération (2), moyennant quoi la présence ou l'absence d'une perturbation de tension dans le réseau (1) est déterminée de manière dynamique et récurrente, une phase de commande étant mise en œuvre de manière dynamique et récurrente lorsque la présence d'une perturbation est déterminée, et les unités de génération (2) étant commandées pendant ladite présence de sorte qu'elles génèrent de l'électricité et contribuent à stabiliser la tension du réseau (1) pendant ladite phase de commande,

dans lequel en outre, lorsque la disparition de ladite perturbation est déterminée dans le procédé, et en l'absence d'autre perturbation, la mise en œuvre de la phase de commande s'interrompt et une phase de stabilisation est mise en œuvre de manière dynamique et récurrente pendant un intervalle de temps limité, tandis que les unités de génération (2) continuent d'être commandées pour générer de l'électricité pendant ladite phase de stabilisation, afin d'assurer une transition fluide et commandée jusqu'à ce que la tension du réseau (1) se stabilise,

dans lequel, lorsqu'une unité de commande locale (3, 6) détermine la présence d'une perturbation, ladite unité de commande locale (3, 6) fonctionne en mode local au début de la phase de commande et au début de la phase de stabilisation, dans chaque cas pendant un intervalle de temps limité, agissant sur son unité (2, 4) associée sans suivre les instructions d'une unité de commande de parc (5), puis agissant, pendant lesdites phases et après l'expiration de l'intervalle de temps respectif, sur son unité (2, 4) associée en suivant les instructions reçues de l'unité de commande de parc (5),

dans lequel, lorsqu'une unité de commande locale (3, 6) agit dans ledit mode local, un mode de génération de puissance réactive est activé pour l'unité (2, 4) associée si la valeur d'une caractéristique électrique mesurée en un point de couplage local (LV), sur la base duquel la perturbation correspondante a été déterminée, est supérieure à une valeur de référence donnée de ladite caractéristique électrique et se situe dans une plage de valeurs donnée supérieure à ladite valeur de référence, ou si ladite valeur est inférieure à ladite valeur de référence et se situe dans une plage de valeurs donnée inférieure à ladite valeur de référence, ledit mode de génération de puissance réactive étant maintenu pendant que ladite perturbation dure et que ladite valeur est maintenue dans l'une desdites plages, un mode de génération de courant réactif étant activé pour ladite unité (2, 4) si ladite valeur se situe en dehors des deux plages et ledit mode de génération de courant réactif étant maintenu pendant que ladite perturbation dure et que ladite valeur est maintenue en dehors des deux plages, ladite unité (2, 4) générant une puissance réactive selon une référence de puissance réactive locale lorsqu'elle fonctionne en mode de génération de puissance réactive, et générant un courant réactif selon une référence de courant réactif locale lorsqu'elle fonctionne en mode de génération de courant réactif,

dans lequel la puissance réactive ou le courant réactif à produire par une unité (2, 4) lorsque celle-ci fonctionne en mode de génération de puissance réactive ou en mode de génération de courant réactif, respectivement, est proportionnel(le) à la valeur mesurée de ladite caractéristique électrique en son point de couplage (LV), dans lequel le courant réactif et la puissance réactive produits par chaque unité (2, 4) sont suivis à tout moment, les valeurs suivies du courant réactif et de la puissance réactive produits étant gelées lorsque l'unité de commande locale correspondante (3, 6) détermine la présence d'une perturbation, la valeur gelée du courant réactif étant ajoutée au courant réactif à produire proportionnellement à la valeur mesurée de ladite caractéristique électrique lorsque ladite unité (2, 4) fonctionne en mode de génération de courant réactif, et la valeur gelée de la puissance réactive étant ajoutée à la puissance réactive à produire proportionnellement à ladite valeur mesurée lorsque ladite unité (2, 4) fonctionne en mode de génération de puissance réactive.

2. Procédé de commande pour parc éolien selon la revendication 1, dans lequel une caractéristique électrique du réseau (1) au point de couplage commun (PCC) du parc éolien (100) et ladite caractéristique électrique en un point de couplage local (LV) associé à chaque unité de génération (2) du parc éolien (100) sont mesurées de manière récurrente, l'unité de commande de parc (5) déterminant la présence d'une perturbation si la caractéristique électrique mesurée au point de couplage commun (PCC) est supérieure à une valeur de seuil maximale prédéterminée correspondante ou est inférieure à un seuil minimal prédéterminé correspondant, ou s'il existe un nombre prédéterminé d'unités de commande locales (3) dans un état de perturbation locale, et si une unité de commande locale (3) déterminant la présence d'une perturbation locale et entrant dans un état de perturbation locale si la caractéristique électrique mesurée au point de couplage (LV) correspondant est supérieure à une valeur de seuil maximale prédéterminée associée ou est inférieure à un seuil minimal prédéterminé associé.

3. Procédé de commande pour parc éolien selon la revendication 2, dans lequel le parc éolien (100) comprend en outre au moins une unité de compensation (4) permettant de fournir si nécessaire un courant réactif et/ou une puissance réactive au réseau (1) et une unité de commande locale (6) associée à ladite unité de compensation (4), une caractéristique électrique du réseau au point de couplage commun (PCC) du parc éolien (100), une caractéristique électrique en un point de couplage (LV) associé à chaque unité de génération (2) du parc éolien (100), et une caractéristique électrique au point de couplage (PC) du dispositif de compensation réactive (4) au réseau (1) étant mesurées de manière récurrente, l'unité de commande de parc (5) déterminant la présence d'une perturbation si la caractéristique électrique mesurée au point de couplage commun (PCC) est supérieure à une valeur de seuil maximale prédéterminée correspondante ou est inférieure à un seuil minimal prédéterminé correspondant, ou s'il existe un nombre prédéterminé d'unités de commande locales (3, 6) dans un état de perturbation locale, et si une unité de commande locale (3, 6) déterminant la présence d'une perturbation locale et entrant dans un état de perturbation locale si la caractéristique électrique mesurée au point de couplage (LV, PC) correspondant est supérieure à une valeur de seuil maximale prédéterminée associée correspondante ou est inférieure à un seuil minimal prédéterminé associé correspondant.

4. Procédé de commande pour parc éolien selon la revendication 2 ou 3, dans lequel, lorsqu'une unité de commande locale (3, 6) n'a pas déterminé la présence de perturbations et que la phase de commande ou la phase de stabilisation est mise en œuvre, ladite unité de commande locale (3, 6) est configurée pour agir sur son unité (2, 4) associée en suivant les instructions reçues de l'unité de commande de parc (5).

5. Procédé de commande pour parc éolien selon l'une quelconque des revendications 2 à 4, dans lequel, lorsqu'une unité de commande locale (3, 6) détermine la présence d'une perturbation, ladite unité de commande locale (3, 6) est configurée pour agir sur son unité (2, 4) associée en suivant les instructions reçues de l'unité de commande de parc (5) durant toute la phase de commande et durant toute la phase de stabilisation.

6. Procédé de commande pour parc éolien selon l'une quelconque des revendications 1 à 5, dans lequel, lorsqu'une unité de commande locale (3, 6) est configurée pour agir en mode local, si la valeur mesurée sur la base de laquelle la présence de la perturbation correspondante a été déterminée se situe en dehors d'une plage de valeurs prédéterminée, ladite unité de commande locale (3, 6) change de configuration et agit sur son unité (2, 4) associée en suivant les instructions reçues de l'unité de commande de parc (5).

7. Procédé de commande pour parc éolien selon l'une quelconque des revendications 2 à 6, dans lequel la caractéristique électrique mesurée est la tension au point de couplage (PCC, LV, PC) correspondant.

8. Parc éolien relié à un réseau électrique (1) et comprenant une pluralité d'unités de génération (2), comprenant en outre une unité de commande de parc (5) et comprenant, pour chaque unité (2), une unité de commande locale (3) associée, dans lequel le parc éolien est configuré pour exécuter un procédé selon l'une quelconque des revendications précédentes.

9. Parc éolien selon la revendication 8, dans lequel l'unité de commande de parc (5) est en communication avec toutes les unités de commande locales (3).

10. Parc éolien selon la revendication 9, comprenant une unité de compensation (4) permettant de fournir si nécessaire un courant réactif et/ou une puissance réactive au réseau (1) et une unité de commande locale (6) pour l'unité de compensation (4), l'unité de commande de parc (5) étant en outre en communication avec toutes les unités de commande locales (3, 6).

11. Parc éolien selon l'une quelconque des revendications 8 à 10, comprenant au moins un capteur (Spec) permettant de mesurer la caractéristique électrique correspondant au point de couplage commun (PCC), et un capteur (Slv, Spc) respectif permettant de mesurer la caractéristique électrique correspondant à chaque point de couplage local (LV, PC).

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015137520 A1
- WO 2015078472 A1
- WO 2015086022 A1